# EUROPEAN PATENT SPECIFICATION

(11) **EP 2 737 375 B1**
(45) Date of publication and mention of the grant of the patent: **16.11.2016**
(21) Application number: 11741522.4
(22) Date of filing: 27.07.2011
(51) Int. Cl.: G05B 19/05, B25J 9/16

(54) **SYSTEM FOR COMMANDING A ROBOT**
SYSTEM ZUR BEFEHLSSTEUERUNG EINES ROBOTERS
SYSTÈME DE COMMANDE D'UN ROBOT

(43) Date of publication of application: 04.06.2014
(73) Proprietor: ABB Schweiz AG, 5400 Baden (CH)
(72) Inventor: DAI, Fan, 64673 Zwingenberg (DE); BECKER, Oliver, 69198 Schriesheim (DE)
(74) Representative: Marks, Frank
(86) International application number: PCT/EP2011/003754
(87) International publication number: WO 2013/013686

(56) References cited:
- EP-A2- 0 227 304
- US-A- 5 825 655
- MARCELLO BONFE ET AL: "PLC-based control of a robot manipulator with closed kinematic chain", ROBOTICS AND AUTOMATION, 2009. ICRA '09. IEEE INTERNATIONAL CONFERENCE ON, IEEE, PISCATAWAY, NJ, USA, 12 May 2009 (2009-05-12), pages 1262-1267, XP031509515, ISBN: 978-1-4244-2788-8

## Description

The invention relates to a system for commanding a robot by a programmable logic controller (PLC), comprising a programmable logic controller, at least two function blocks with at least one input for triggering an execution of a belonging PLC function and at least one output indicating the status of the belonging function block, whereas each function block corresponds to a movement segment of a movement path of the robot to be commanded, a robot controller interface which is foreseen to orchestrate the function blocks currently in execution into a robot command and a command queue, which is foreseen to store the orchestrated robot commands and send them sequentially to the robot.

It is known, that robots are widely used in industrial applications, such as pick and place, machine tending and palletizing.. Usually, several robots are working together along a common production line, whereas each robot is foreseen for a certain production step. The overall control of those robots is typically realized by a system, which is based on a programmable logic controller (PLC). The programmable logic controller coordinates the triggering of the working sequences of the different robots dependent for example on the position of a conveyor system, wherewith a workpiece to be assembled is transported along the different working positions of the robots. The programming of a PLC is standardized in a wider manner, for example by IEC 61131, so a person who is skilled in PLC programming is able to operate a wide range of different PLC controlled production lines concerning this issue. Furthermore the description of the PLCOpen programming standard provides information about PLC programming, which is known by the man skilled in the art.

A robot comprises normally a robot manipulator with several degrees of freedom in movement, for example six or seven, whereas at the end of the robot manipulator typically an end effector like a gripper or another tool like a welding gun is foreseen.

A robot manipulator with at least six degrees of freedom in movement is able to position a belonging tool within each coordinate of its working range in each orientation. Thus, a coordinate along a movement path of the robot tool requires six values, three for the belonging coordinate and three for the belonging orientation. The working range of a robot depends on the robot and might be for example within a radius of 1 m to 3m around the belonging robot base.

But also other arbitrary kinematic mechanisms with less degree of freedom in movement such as a machine tool with only two degrees of freedom in movement shall be seen as a robot within this patent application.

The movement of the robot is typically controlled by a dedicated robot controller, which comprises on the one side a kind of computer system and on the other side several amplifiers for the belonging drives of the robot. Typically each degree of freedom in movement requires a dedicated drive such as an electrical motor. The desired movement of the robot is normally contained within a robot program, which is stored on the computer system of the robot controller. The movement path is composed by a sequence of movement sections inbetween given coordinates, which are specified within the robot program. Thus a robot program might contain commands with the content *"linear move from current coordinate to coordinate [x1, x2, x3, o1, o2, o3] with speed [z]", "linear move from current coordinate to current coordinate* + *delta [x1, x2, x3, o1, o2, o3] with speed [z] or "circle around coordinate [x1, x2, x3] in plane [y1,y2,y3], start angle [a], end angle [b]"*. The robot controller calculates the belonging control signals for the different motors, so that the tip of the robot manipulator executes the desired motion. It is also thinkable, that two or more robots are controlled by a common robot controller.

Thus, the programming of a robot is a rather time consuming task and requires special knowledge. Since each robot manufacturer typically provides a different programming language for his robots, the programming effort also increases if different kinds of robots are installed within the same production line of a manufacturing plant. In the meanwhile systems are known, which allow the commanding of a robot by PLC. Such systems are described for example in the patent applications PCT/EP2011/000243 and PCT/EP2011/000244.

An exemplary system for commanding a robot by a programmable logic controller (PLC) comprises at least two function blocks with at least one input for triggering an execution of a belonging PLC function and at least one output indicating the status of the belonging function block, whereas each function block corresponds to a movement segment of a movement path of the robot to be commanded, a robot controller interface which orchestrates the function blocks currently in execution into a robot command, whereas the function blocks are linked sequentially, so that the execution of a subsequent function block is triggered by the output of the preceding function block, whereas the orchestrated robot commands are applicable to a robot controller and whereas the robot controller interface is prepared to receive a feedback signal of the robot controller, which influences the output status of the belonging function block.

Patent document US 5 825 655 A discloses a normal operating condition restoration device with a taught point memory device for a robot for storing successive taught points that constitute a work line on which a tool travels in relation to a workpiece and storing taught points for retraction which are among the taught points constituting the work line and to which the tool can be retracted from the workpiece.

Marcello Bonfe et Al: "PLC-based control of a robot manipulator with closed kinematic chain", ROBOTlCS AND AUTOMATION, 2009. ICRA '09. IEEE INTERNATIONAL CONFERENCE ON, IEEE PISCATAWAY, NJ, USA, 12 May 2009, pages 1262-1267, ISBN: 978-1-4244-2788-8 discloses a design and implementation of a robot control system on a hardware platform based on a Programmable Logic Controller (PLC). The controlled robot is a 4 degree of freedom in movement manipulator with a closed kinematic chain designed for pick-and-place applications. In particular the paper analyses the drawbacks and the advantages related to the choice of standard PLC's in this kind of applications compared to a specialized hardware platform.

a method of controlling a robot, and more particularly to a method of controlling a playback robot of the type in which major points or positions in space are instructed or recorded to establish a path that the robot should trace, the method being capable of moving the robot back to the original point or position along a predetermined path.Patent document EP 0 227 404 A2 discloses a method of controlling a robot, and more particularly a method of controlling a playback robot of the type in which major points or positions in space are instructed or recorded to establish a path that the robot should trace, the method being capable of moving the robot back to the original point or position along a predetermined path.

Disadvantageously within this state of the art is that the movement operation of the robot respectively the manipulator is possible only in direction of the programmed movement path respectively its movement segments. Due to the sequentially linkage of the function blocks a backwards motion is not possible. But exactly this functionality might be required in some cases, for example after an emergency stop of a robot, where the robot possibly has left the programmed movement path and stopped at a stop position on or outside the movement path. For resuming the robot program the robot respectively the tool center point of the robot arm has to be moved back from the stop position on or near the programmed path to preferably at least the point of interruption which is located on the movement path. Moreover, in most cases a movement backwards along one or more movement segments of the programmed movement path is desired before resuming the program execution. Also during the manual teaching of a robot program using PLC such a backward movement might be required.

Based on this state of the art it is the objective of the invention to provide a PLC based system for controlling or commanding a robot, which is also suitable for backwards motion.

This problem is solved by a system for commanding a robot of the aforementioned kind. The system is characterized in that the command queue is foreseen to keep at least the lastly executed robot command within its memory, that the command queue is foreseen to store additionally the information, whether a robot command has not yet been executed (waiting), is currently in execution (active) or has been executed (done) and that the system is foreseen to control a backwards motion of the robot along the movement path by stopping the execution of not yet executed robot commands for forward motion and by sequentially resending at least one executed robot command stored in the command queue in a contrawise sequence to the robot by using the PLC.

The basic idea of the invention consists in keeping the already executed robot commands, that's execution is reported from the robot controller to the PLC, within the command queue. Normally those commands are eliminated from the command queue after their execution. Each robot command corresponds to a certain movement segment of the movement path such as a linear section, a curve or a circle segment. Thus the history of the lastly executed movement path is stored within the command queue, providing the frame coordinates for a backwards motion along the same path. For this reason it is necessary to assign each robot command within the command queue to one of the three states "waiting", "active" and "done". At minimum one executed robot command with the status "done" has to be provided within the command queue to have sufficient data for a backwards motion. Preferably a larger number of executed robot commands such as 10, 20 or 50 might be stored within the command queue to have the possibility for a longer backwards motion.

According to the invention the already executed robot commands from the command queue are executed again by the robot, but in contrawise sequence. So the function block corresponding to lastly executed robot command is re-executed first by the PLC. Thus in the next PLC cycle the belonging function block is triggered again and the belonging robot command is orchestrated in the command queue for further backwards execution by the robot respectively the robot controller. Afterwards the second to last executed robot command is executed in the same way and so on. Preferably only one robot command for backward execution is currently within the command queue respectively an usually also foreseen motion queue of the robot controller, so that the procedure for a second backwards motion command is started, when the procedure for the first backwards motion command has been completed. Thus it is possible to enable a PLC based robot control for backward motion.

In a variant of the invention a dedicated operation mode for backward motion is foreseen. This might become initialized by a tech-pendant for manually interaction for example, which is typically used for a robot. A teach pendant enables the operator to be close to the robot while the robot is teached or moved backwards. A backward operation mode might be initialized by pressing a certain button of the teach pendant to prohibit an unintentional backward movement. Preferably the backward motion in the belonging mode is combined with a significant lower movement speed - for example by a factor of ten - than the movement speed according to the robot program. Background is to reduce the risks of collisions respectively to increase the reaction time for the operator to stop the robot movement in case of an upcoming collision.

According to a further embodiment of the invention an executed robot command is foreseen to be acknowledged before resending to the robot respectively before re-orchestrating the robot command of the belonging function block into the command queue. The acknowledgement of each robot command respectively the belonging movement segment before its individual execution reduces the risk of collisions or other dangerous situations while moving backwards.

According to the invention, the system is adapted to delete all not yet executed robot commands for forward motion from the command queue in case of an intended backward motion. Those commands have been orchestrated into the command queue in expectance of the normal execution of the motion program, which however has been interrupted. After having finished the backwards motion and resuming the robot program again those robot commands will be re-orchestrated into the command queue so the previously orchestrated and not yet executed robot commands are useless. Moreover, they are complicating the orchestrating and execution of the robot commands for backward motion.

According to a preferred embodiment of the invention the robot comprises an own internal backward motion functionality which is foreseen to be addressed for backwards motion along the path of an incompletely executed movement segment. This is especially useful when the forward execution of the robot program has been inter-rupted while a robot command was currently in execution so that the robot has brought to stop inbetween the starting and end point of a movement segment.

The reason for using the backward motion functionality of a robot in case that the robot did not exactly stop on the start- or end- coordinates of a movement segment is that the PLC based control system does not know the exact stop position of the robot. Moreover the control system is foreseen to execute either complete movement segments or incomplete linear movement segments in inverse direction. Hence, a typical example for using the backwards motion functionality of the robot is a curved movement segment. Thus in those cases it is easier to use an existing backwards motion functionality of the robot to move backwards. After having reached the end-coordinate of the preceding complete movement segment the PLC based backward motion control is addressed for further backwards motion.

Following another embodiment of the invention a request for backwards motion is only executable, if at least one executed robot command is available within the command queue, which has not yet been resend to the robot. Such a request might be triggered by a teach pendant for controlling a stepwise backwards motion. In case that such a backwards motion is not possible, for example since the execution of the robot program has not yet been started and no executed robot command is stored within the command queue, the execution of such a request is denied by the system.

In a preferred variant of the invention it is foreseen to swap coordinate data of the starting and/or end point of a movement segment represented by an already executed robot command before resending it to the robot respectively before re-execution of the belonging function block and re-orchestrating the belonging robot command into the command queue. It has once again remarked that for backwards motion only one robot command shall be currently within the command queue. The next robot command for backwards motion is only released for orchestrating in the command queue, when the preceding backwards robot command has been executed.

A movement segment corresponds to a path segment, which is characterized by a starting coordinate, an end coordinate and a certain rule how to move inbetween those coordinates. Typically a coordinate for a robot with six or more degrees of freedom in movement comprises six values, three for the position in the three dimensional space and three for the orientation. A rule how to move corresponds typically to a robot command and determines, whether the motion is linear, along a curve or along a circle segment or such. Since the motion along a movement segment is directed, it is typically necessary to swap the starting and end coordinates to gain a homogenous backwards motion.

Following another preferred embodiment of the invention coordinate data of the starting point of a movement segment are represented by the coordinate data of the end point of the preceding movement segment. Typically all movement segments are homogenously linked together so that the coordinates are over-redundant. In some cases the robot commands require only an end position since the current position is seen as the starting point for the movement. Thus the number of coordinate data associated with the robot commands is reduced in an advantageous way by assigning only the end coordinate of the movement to the robot command. This has to be considered also for the coordinate swap within the backward motion.

According to a further embodiment of the invention the command queue is organized in the kind of a shifting register or a ring buffer, so that the oldest robot command is overwritten by the belonging newest robot command. Dependent on the overall storage capability of the command queue the length of the buffer for the storage of already executed robot commands corresponds to the difference of the length of the command queue to the number of robot commands which are orchestrated in advance into the command queue including the robot command which is currently in execution. So the complete currently free storage capacity of the command queue is used as buffer for the storage of the already executed robot commands.

Another embodiment of the invention is characterized in that an executed robot command within the command queue is foreseen to be deleted after resending. Since this robot command will not be re-used after resending it is a needless data within the command queue which might be hindering for the further execution of the backwards motion. Thus, according to the invention only robot commands which might be required for the further preceding of the robot program have to be provided within the command queue.

A further variant of the system is characterized in that the programmable logic controller and a robot controller for the robot to be commanded are integrated within a common data processing device. This enables the reduction of required hardware. Thus the robot controller itself which is delivered together with the robot could comprise the required PLC functionality. It is either possible to realize both controller functionalities as software function on the same hardware platform or to provide different hardware platforms in the same cabinet.

But also additional features are within the scope of the invention, for example the automatic identifying of the robot command which was currently in execution when the system has been stopped. This is used for a backward motion of the robot to the end coordinates of the last preceding movement segment by using a backward motion functionality of the robot itself.

Further advantageous embodiments of the invention are mentioned in the dependent claims.

The invention will now be further explained by means of an exemplary embodiment and with reference to the accompanying drawings, in which:
Figure 1 shows an exemplary system for commanding a robot by PLC and
Figure 2 shows an exemplary robot with movement path.

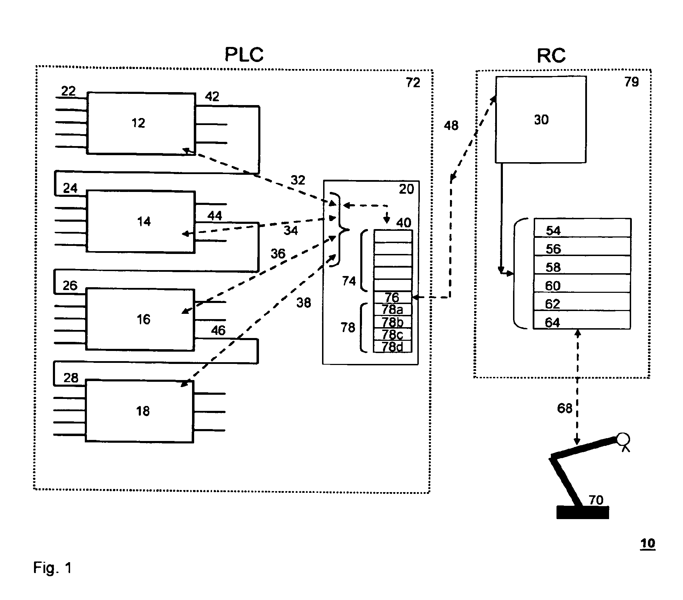

**Figure 1** shows an exemplary system 10 for commanding a robot by PLC. The programmable logic controller 72 comprises four exemplary function blocks 12, 14, 16, 18 which are sequentially connected. The execution of the first function block 12 can be triggered by its input 22, for example by an external manual signal. The first output 42 of the function block is connected to the trigger input 24 of the subsequent function block 14. The first output 42 indicates in its TRUE state, that the execution of the function block 12 has been started. Thus the subsequent second function block 14 is executed immediately after starting the preceding block 12. So the belonging robot commands are orchestrated rather simultaneously by the robot controller interface 20 into real robot commands. Both orchestrated commands are applied to the robot controller 79, which comprises a motion queue for sequentially storing the robot- respectively motion commands.

A data connection line 48, which is typically a fieldbus, is foreseen inbetween the programmable logic controller 72 and a robot controller 79. In case that the programmable logic controller and the robot controller are realized as software modules on the same hardware platform the connection line 48 corresponds to an data exchange between the software modules. The command queue can either be part of the programmable logic controller 72 itself - as indicated with reference sign 40 in this example - but it can also be integrated into an optional PLC interface 30, which is foreseen to coordinate the communication with the programmable logic controller 72.

Apart from the command queue 40 on the PLC side for storing orchestrated robot commands typically an additional motion queue on the robot controller 79 side is foreseen for storing the belonging motion commands. Thus the command queue 40 on the PLC side contains typically codes for robot commands and not directly the robot commands themselves. Those codes, which might be some numbers for example, are easier to handle. The optional PLC interface 30 translates those codes into the belonging robot commands 54, 56, 58, 60, 62, 64 and provides them to the robot controller internal motion queue.

The robot controller 79 comprises a computing device with the ability to store and execute a robot movement program. In this example the orchestrated motion commands 54, 56, 58, 60, 62, 64 are sequentially integrated into a motion queue of the executable robot program, so that the robot 70 executes sequentially those commands.

A third function block 16 is triggered with its trigger input 26 by the second output 44 of the second movement block 14. The second output 44 encodes the second state, namely that the execution of the belonging movement segment has been started. Thus the robot command corresponding to the third function block 16 is orchestrated into the command queue after the robot 70 has started the execution of the movement segment corresponding to the second function block 14. The information that the execution has already been started has been provided by the communication line 48 from the robot controller 79 to the programmable logic controller 72 in the meanwhile.

A forth function block 18 is triggered with its trigger input 28 by the third output 46 of the third function block 16. The third output 46 encodes the third state, namely that the execution of the movement segment corresponding to the third movement block 16 has been finished. Thus the belonging robot command is not orchestrated into the command queue until all previous commands within the command queue have been executed by the robot 70. Therefore the robot motion will stop before the execution of the last robot command. In this case the data communication lines 32, 34, 36, 38 are assumed to be realized by a pure data exchange within the programmable logic controller 72, for example by variables. If the programmable logic controller would have been realized by a dedicated physical hardware and not by a software module, those data communication lines would be real physically existing lines.

The command queue 40 of the programmable logic controller 72 is organized in the kind of a shifting register. Thus the orchestrated robot commands are fed in sequentially at one end of the command queue 40, in this sketch at the top. Those robot commands, which are in a "waiting" state since they are not yet executed, are stored within the area 74 of the shifting register. The length of the area 74 is variable, depending on how many robot commands in advance are orchestrated into the command queue. The command which is currently in execution and is in "active" state is currently stored within the area 76. The physical allocation of the area 76 may vary dependent on the number of not yet executed robot commands which are stored in the area 74. Each robot command is associated with its current status within the command queue 40.

According to the invention the already executed robot commands with "done" state are stored respectively kept within the area 78 of the shifting register respectively within the command queue. According to the prior art, the already executed robot commands would have been eliminated from the command queue 40. Thus, by storing the executed robot commands, history information of previously robot motion is provided.

In case of a system stop the robot stops motion and the robot commands according to the regular robot program are no longer orchestrated into the command queue. Afterwards the robot is switched into a backwards motion mode. Thus the not yet executed robot commands within the area 74 of the command queue respectively the shifting register will be eliminated since they are useless data. Subsequent the robot command which was currently in execution during the system stop is automatically determined within the area 76.

Then a robot command is send to the robot 30 respectively robot controller 79 for moving the robot to the end coordinates of the movement segment corresponding to the lastly executed robot command, which is marked in the figure with reference sign 78a. In this special case the backwards motion functionality of the robot itself is applied since in this example the system for commanding a robot by PLC is only foreseen to perform complete movement segments in backward motion.

In the next step the starting and end coordinates of the movement segment corresponding to the lastly executed robot command 78a are swapped and the belonging function block is re-executed whereas the belonging robot command is re-orchestrated in the command queue 40. Afterwards it is - case wise after an acknowledgement by an operator - resend to the robot 70 respectively the belonging robot controller 79 and executed as backward motion by the robot 70. Optionally the second to last executed robot command 78b and afterwards the third to last 78c and forth to last 78d robot commands are handled in the same way.

After finishing the backwards motion the system is switched back to regular operational mode. Then the program is resumed from the actual position of the robot along the programmed path as described before, namely by executing the belonging function blocks, orchestrating the belonging robot commands into the command queue and executing the commands by the robot.

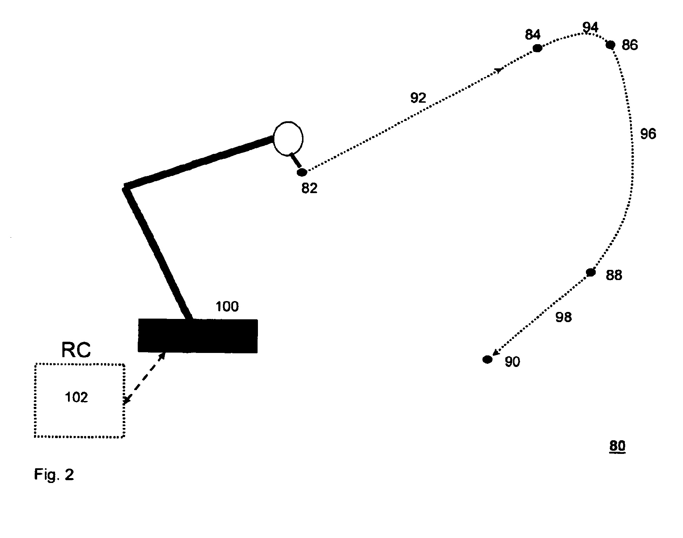

**Figure 2** shows an exemplary robot with movement path in a sketch 80. A robot 100 is connected to a robot controller 102, which is connected to a not shown programmable logic controller. According to the intended movement path the robot 100 will move along a movement path defined by the coordinates 82, 84, 86, 88, 90 which build the movement segments 92, 94, 96 and 98 inbetween them. Each coordinate 82, 84, 86, 88, 90 has to be assumed as at least comprising six coordinate values, three for the coordinates in the XYZ directions and three for the belonging orientation, whereas also configuration data for the robot might be foreseen. Of course it is also possible, to command a robot with less degrees of freedom in movement by a programmable logic controller according to the invention.

### List of reference signs

- 10: exemplary system for commanding a robot by PLC
- 12: first function block
- 14: second function block
- 16: third function block
- 18: forth function block
- 20: robot controller interface
- 22: trigger input of first function block
- 24: trigger input of second function block
- 26: trigger input of third function block
- 28: trigger input of forth function block
- 30: PLC interface
- 32: first data communication line
- 34: second data communication line
- 36: third data communication line
- 38: forth data communication line
- 40: command queue
- 42: first output of first function block
- 44: second output of second function block
- 46: third output of third function block
- 48: fifth data communication line
- 54: first robot command
- 56: second robot command
- 58: third robot command
- 60: forth robot command
- 62: fifth robot command
- 64: sixth robot command
- 68: control line to robot
- 70: first robot
- 72: programmable logic controller
- 74: robot commands not yet executed
- 76: robot command in execution
- 78: executed robot commands
- 78a: lastly executed robot command
- 78b: second to last executed robot command
- 78c: third to last executed robot command
- 78d: forth to last executed robot command
- 79: first robot controller
- 80: exemplary robot with movement path
- 82: first coordinate of movement path
- 84: second coordinate of movement path
- 86: third coordinate of movement path
- 88: forth coordinate of movement path
- 90: fifth coordinate of movement path
- 92: first movement segment
- 94: second movement segment
- 96: third movement segment
- 98: forth movement segment
- 100: second robot
- 102: second robot controller

## Claims

1. System (10) for commanding a robot (70, 100) by a programmable logic controller (72), PLC, comprising the programmable logic controller (72), wherein the PLC comprises :
• at least two function blocks (12, 14, 16, 18) with at least one respective input for triggering (22, 24, 26, 28) an execution of a belonging PLC function and at least one respective output (62, 44, 46) indicating the status of the respective function block (12, 14, 16, 18), whereas each function block (12, 14, 16, 18) corresponds to a movement segment (92, 94, 96, 98) of a movement path of the robot (70, 100) to be commanded,
• a robot controller interface (20) which is adapted to orchestrate a *PLC* function block (12, 14, 16, 18) currently in execution into a robot command (54, 56, 58, 60, 62, 64, 74, 76, 78),
• a command queue (40), which is adapted to store respective orchestrated robot commands (54, 56, 58, 60, 62, 64, 74, 76, 78) for sending them sequentially to the robot (70, 100) for sequentially execution,
**characterized in that**
• the command queue (40) is adapted to keep at least the lastly executed robot command (78) within its memory,
• the command queue (40) is adapted to store additionally the information, whether a robot command (54, 56, 58, 60, 62, 64, 74, 76, 78)
• has not yet been executed (waiting) (74),
• is currently in execution (active) (76) or
• has been executed (done) (78),
• the system is adapted to control a backwards motion of the robot (70, 100) along the movement path by stopping the execution of not yet executed robot commands (74) for forward motion and by sequentially resending the at least one executed robot command (78) stored in the command queue (40) in a contrawise sequence to the robot (70,100) by using the PLC and
• the system is adapted to delete all not yet executed robot commands (74) for forward motion from the command queue (40) in case of a backward motion.

2. System according to claim 1, **characterized by** an operation mode for backward motion.

3. System according to claim 1 or 2, **characterized in that** an executed robot command (78) is adapted to be acknowledged before resending to the robot (70,100).

4. System according to any of the previous claims, **characterized in that** the robot (70, 100) comprises an own internal backward motion functionality which is adapted to be addressed for backwards motion along the path of an incompletely executed movement segment (92, 94, 96, 98).

5. System according to any of the previous claims, **characterized in that** a request for backwards motion is only executable, if at least one executed robot command (78) is available within the command queue (40), which has not yet been resend to the robot (70, 100).

6. System according to any of the previous claims, **characterized in that** it is adapted to swap coordinate data of the starting and/or end point of a movement segment (92, 94, 96, 98) represented by an already executed robot command (78) before resending it to the robot (70, 100).

7. System according to claim 6, **characterized in that** coordinate data of the starting point of a movement segment (92, 94, 96, 98) are represented by the coordinate data of the end point of the preceding movement segment (92, 94, 96, 98).

8. System according to any of the previous claims, **characterized in that** the command queue (40) is organized in the kind of a shifting register or a ring buffer, so that the oldest robot command is overwritten by the belonging newest robot command.

9. System according to any of the previous claims, **characterized in that** an executed robot command (78) within the command queue (40) is adapted to be deleted after resending.

10. System according to any of the precious claims, **characterized in that** the programmable logic controller (72) and a robot controller (79) for the robot (70, 100) to be commanded are integrated within a common data processing device.

## Patentansprüche

1. System (10) zur Befehlssteuerung eines Roboters (70, 100) durch eine speicherprogrammierbare Steuerung (72) (SPS), das die speicherprogrammierbare Steuerung (72) umfasst, wobei die SPS Folgendes umfasst:
• mindestens zwei Funktionsblöcke (12, 14, 16, 18) mit mindestens einem jeweiligen Eingang zum Auslösen (22, 24, 26, 28) einer Ausführung einer dazu gehörenden SPS-Funktion und an mindestens einem jeweiligen Ausgang (62, 44, 46) Angeben des Zustands des jeweiligen Funktionsblocks (12, 14, 16, 18), wobei jeder Funktionsblock (12, 14, 16, 18) einem Bewegungssegment (92, 94, 96, 98) eines Bewegungswegs des Roboters (70, 100), der zu steuern ist, entspricht,
• eine Robotersteuerschnittstelle (20), die angepasst ist, um einen SPS-Funktionsblock (12, 14, 16, 18), der aktuell in Ausführung ist, in einen Roboterbefehl (54, 56, 58, 60, 62, 64, 74, 76, 78) zu orchestrieren,
• eine Befehlswarteschlange (40), die angepasst ist, um jeweilige orchestrierte Roboterbefehle (54, 56, 58, 60, 62, 64, 74, 76, 78) zu speichern, um sie sequenziell zu dem Roboter (70, 100) zur sequenziellen Ausführung zu senden,
**dadurch gekennzeichnet, dass**
• die Befehlswarteschlange (40) angepasst ist, um mindestens den zuletzt ausgeführten Roboterbefehl (78) in ihrem Speicher zu behalten,
• die Befehlswarteschlange (40) angepasst ist, um zusätzlich die Informationen zu speichern, ob ein Roboterbefehl (54, 56, 58, 60, 62, 64, 74, 76, 78)
• noch nicht ausgeführt wurde (wartet) (74),
• derzeit ausgeführt wird (aktiv) (76) oder
• ausgeführt wurde (erledigt) (78),
• das System angepasst ist, um eine Rückwärtsbewegung des Roboters (70, 100) entlang des Bewegungswegs zu steuern, indem das Ausführen noch nicht ausgeführter Roboterbefehle (74) für Vorwärtsbewegung gestoppt wird, und indem sequenziell der mindestens eine ausgeführte Roboterbefehl (78), der in der Befehlswarteschlange (40) gespeichert ist, in einer umgekehrten Sequenz zu dem Roboter (70, 100) gesendet wird, indem die SPS verwendet wird, und
• das System angepasst ist, um alle noch nicht ausgeführten Roboterbefehle (74) für Vorwärtsbewegung aus der Befehlswarteschlange (40) in dem Fall einer Rückwärtsbewegung zu löschen.

2. System nach Anspruch 1, **gekennzeichnet durch** einen Betriebsmodus für Rückwärtsbewegung.

3. System nach Anspruch 1 oder 2, **dadurch gekennzeichnet, dass** ein ausgeführter Roboterbefehl (78) angepasst ist, um vor dem Neusenden zu dem Roboter (70, 100) bestätigt zu werden.

4. System nach einem der vorhergehenden Ansprüche, **dadurch gekennzeichnet, dass** der Roboter (70, 100) eine eigene interne Rückwärtsbewegungsfunktionalität umfasst, die angepasst ist, um für Rückwärtsbewegung entlang des Wegs eines unvollständig ausgeführten Bewegungssegments (92, 94, 96, 98) adressiert zu sein.

5. System nach einem der vorhergehenden Ansprüche, **dadurch gekennzeichnet, dass** eine Anfrage um Rückwärtsbewegung nur ausführbar ist, falls mindestens ein ausgeführter Roboterbefehl (78) innerhalb der Befehlswarteschlange (40) verfügbar ist, der noch nicht zu dem Roboter (70, 100) zurückgesendet wurde.

6. System nach einem der vorhergehenden Ansprüche, **dadurch gekennzeichnet, dass** es angepasst ist, um Koordinatendaten des Anfangs- und/oder Endpunkts eines Bewegungssegments (92, 94, 96, 98), das durch einen bereits ausgeführten Roboterbefehl (78) dargestellt ist, auszutauschen, bevor es zu dem Roboter (70, 100) zurückgesendet wird.

7. System nach Anspruch 6, **dadurch gekennzeichnet, dass** die Koordinatendaten des Anfangspunkts eines Bewegungssegments (92, 94, 96, 98) durch die Koordinatendaten des Endpunkts des vorhergehenden Bewegungssegments (92, 94, 96, 98) dargestellt sind.

8. System nach einem der vorhergehenden Ansprüche, **dadurch gekennzeichnet, dass** die Befehlswarteschlange (40) in der Art eines Schieberegisters oder eines Ringpuffers organisiert ist, so dass der älteste Roboterbefehl durch den entsprechenden neuesten Roboterbefehl überschrieben wird.

9. System nach einem der vorhergehenden Ansprüche, **dadurch gekennzeichnet, dass** ein ausgeführter Roboterbefehl (78) innerhalb der Befehlswarteschlange (40) angepasst ist, um nach dem Neusenden gelöscht zu werden.

10. System nach einem der vorhergehenden Ansprüche, **dadurch gekennzeichnet, dass** die speicherprogrammierbare Steuerung (72) und ein Roboter-Controller (79) für den zu steuernden Roboter (70, 100) innerhalb einer gemeinsamen Datenverarbeitungsvorrichtung integriert sind.

## Revendications

1. Système (10) pour commander un robot (70, 100) avec une unité de commande logique programmable (72) PLC, comprenant l'unité de commande logique programmable (72), laquelle PLC comprend :
- au moins deux blocs de fonction (12, 14, 16, 18) avec au moins une entrée respective pour déclencher (22, 24, 26, 28) une exécution d'une fonction PLC d'appartenance et au moins une sortie respective (62, 44, 46) indiquant le statut du bloc de fonction respectif (12, 14, 16, 18), chaque bloc de fonction (12, 14, 16, 18) correspondant à un segment de déplacement (92, 94, 96, 98) d'un trajet de déplacement du robot (70, 100) à commander ;
- une interface d'unité de commande de robot (20) conçue pour orchestrer un bloc de fonction PLC (12, 14, 16, 18) couramment exécuté dans une instruction de robot (54, 56, 58, 60, 62, 64, 74, 76, 78) ;
- une file d'attente de commande (40) conçue pour stocker des instructions de robot orchestrées (54, 56, 58, 60, 62, 64, 74, 76, 78) respectives afin de les envoyer séquentiellement vers le robot (70, 100) pour une exécution séquentielle ;
**caractérisé en ce que**
- la file d'attente de commande (40) est conçue pour conserver au moins la dernière instruction robot exécutée (78) dans sa mémoire ;
- la file d'attente de commande (40) est conçue pour stocker en outre des informations indiquant si une instruction de robot (54, 56, 58, 60, 62, 64, 74, 76, 78) :
o n'a pas encore été exécutée (attente) (74) ;
o est en cours d'exécution (active) (76) ; ou
o a été exécutée (terminé) (78) ;
- le système est conçu pour commander un déplacement arrière du robot (70, 100) le long du trajet de déplacement en arrêtant l'exécution des instructions de robot non encore exécutées (74) pour un déplacement avant et en renvoyant séquentiellement ladite au moins une instruction de robot exécutée (78) stockée dans la file d'attente de commande (40) dans une séquence inverse vers le robot (70, 100) en utilisant la PLC ; et
- le système est conçu pour effacer toutes les instructions de robot non encore exécutées (74) pour le déplacement avant de la file d'attente de commande (40) dans le cas d'un déplacement vers l'arrière.

2. Système selon la revendication 1, **caractérisé par** un mode de fonctionnement pour un déplacement arrière.

3. Système selon la revendication 1 ou 2, **caractérisé en ce qu'**une instruction de robot exécutée (78) est conçue pour faire l'objet d'un accusé de réception avant le renvoi vers le robot (70, 100).

4. Système selon l'une quelconque des revendications précédentes, **caractérisé en ce que** le robot (70, 100) comprend une fonctionnalité de déplacement arrière interne propre qui est conçue pour être utilisée pour un déplacement arrière le long du trajet d'un segment de déplacement exécuté de manière incomplète.

5. Système selon l'une quelconque des revendications précédentes, **caractérisé en ce qu'**une demande de déplacement arrière est uniquement exécutable si au moins une instruction de robot exécutée (78) est disponible dans la file d'attente de commande (40) et n'a pas été encore renvoyée vers le robot (70, 100).

6. Système selon l'une quelconque des revendications précédentes, **caractérisé en ce qu'**il est conçu pour échanger des données de coordonnées du point de départ et/ou de fin d'un segment de déplacement (92, 94, 96, 98) représenté par une instruction de robot déjà exécutée (78) avant de la renvoyer au robot (70, 100).

7. Système selon la revendication 6, **caractérisé en ce que** les données de coordonnées du point de départ d'un segment de déplacement (92, 94, 96, 98) sont représentées par les données de coordonnées d'un point de fin du segment de déplacement précédent (92, 94, 96, 98).

8. Système selon l'une quelconque des revendications précédentes, **caractérisé en ce que** la file d'attente de commande (40) est organisée sous forme d'un registre de décalage ou d'un tampon annulaire de sorte que l'instruction de robot la plus ancienne soit écrasée par l'instruction de robot correspondante la plus récente.

9. Système selon l'une quelconque des revendications précédentes, **caractérisé en ce qu'**une instruction de robot exécutée (78) dans la file d'attente de commande (40) est conçue pour être effacée après le renvoi.

10. Système selon l'une quelconque des revendications précédentes, **caractérisé en ce que** l'unité de commande logique programmable (72) et une unité de commande de robot (79) pour le robot (70, 100) à commander sont intégrées dans un dispositif de traitement de données commun.
